# EUROPÄISCHE PATENTSCHRIFT

(11) **EP 2 669 242 B1**
(45) Veröffentlichungstag und Bekanntmachung des Hinweises auf die Patenterteilung: **14.12.2016**
(21) Anmeldenummer: 13002811.1
(22) Anmeldetag: 31.05.2013
(51) Int. Cl.: H01M 10/0525, H01M 10/42, H01M 10/48, B66F 9/075

(54) **FLURFÖRDERZEUG MIT BATTERIEEINSCHUBPLÄTZEN**
INDUSTRIAL TRUCK WITH BATTERY INSERTION AREAS
CHARIOT DE MANUTENTION AVEC EMPLACEMENTS D'INSERTION DE BATTERIE

(30) Priorität: 31.05.2012 DE 102012010675
(43) Veröffentlichungstag der Anmeldung: 04.12.2013
(73) Patentinhaber: Jungheinrich Aktiengesellschaft, 22047 Hamburg (DE)
(72) Erfinder: Opitz, Michael, 23866 Nahe (DE); Vahldiek, Dietrich, 24558 Henstedt-Ulzburg (DE); Kautsky, Adrian, 21079 Hamburg (DE)
(74) Vertreter: Hauck Patentanwaltspartnerschaft mbB

(56) Entgegenhaltungen:
- EP-A1- 2 293 375
- DE-A1-102009 020 178
- US-B1- 6 184 656

## Beschreibung

Die vorliegende Erfindung betrifft ein Flurförderzeug mit einem Antriebsteil und einer Vielzahl von Batterieeinschubplätzen.

Oftmals werden Flurförderzeuge mit Batteriesystemen betrieben, welche ein Wiederaufladen der Batterien im Flurförderzeug ermöglichen. Batteriesysteme von Flurförderzeugen sind derart ausgebildet, dass die Energiebereitstellung durch das Batteriesystem im Flurförderzeug sowohl für den Antrieb des Flurförderzeugs als auch für den Antrieb sämtlicher Hilfsfunktionen, wie beispielsweise das Anheben des Lastaufnahmemittels, durch das Batteriesystem im Flurförderzeug möglich sind. Solche Batteriesysteme sind oftmals im Flurförderzeug fest eingebaut, so dass bei entsprechender Entladung des Batteriesystems das Flurförderzeug an eine Ladestation gefahren werden muss, um es dort wieder aufzuladen.

Aus der DE 10 2009 020 178 A1 ist ein System zum Speichern von Energie bekannt geworden. Das Energiesystem weist einen ersten Energiespeicher mit einer ersten Steuereinheit zum Steuern des Betriebs und Überwachen des Zustand des ersten Energiespeichers, einen zweiten Energiespeicher mit einer zweiten Steuereinheit zum Steuern des Betriebs und Überwachen des Zustands des zweiten Energiespeichers und eine übergeordnete Steuereinheit zum Steuern des Betriebs und Überwachen des Zustands einer Gesamtheit von Energiespeichern auf, welche den ersten Energiespeicher und den zweiten Energiespeicher umfasst. Ein solches Energiesystem ist nach dem Prinzip eines Master-Slave-Systems aufgebaut, wobei der zweite Energiespeicher und gegebenenfalls weitere Energiespeicher dem ersten Energiespeicher untergeordnet sind. Nachteilig bei dieser Lösung ist, dass die übergeordnete Steuereinheit, d. h. die Mastereinheit im Vergleich zu den untergeordneten Slavesteuereinheiten konstruktionsbedingt aufwendiger ausgebildet ist.

Der vorliegenden Erfindung liegt die Aufgabe zugrunde, eine Flurförderzeug mit einem Batteriesystem zur Verfügung zu stellen, das einfacher aus dem Flurförderzeug entnommen und wieder eingesetzt werden kann.

Diese Aufgabe wird gelöst durch ein Flurförderzeug mit den Merkmalen des Anspruchs 1. Vorteilhafte Weiterbildungen werden durch die Unteransprüche angegeben.

Erfindungsgemäß weist das Flurförderzeug ein Antriebsteil und eine Vielzahl von Batterieeinschubplätzen auf. Ferner ist in der Vielzahl von Batterieeinschubplätzen in mindestens zwei Batterieeinschubplätzen je eine Batterieeinheit eingesetzt. Diese sind mit elektrischen Kontakten des jeweiligen Batterieeinschubplatzes verbunden. Jede Batterieeinheit weist ferner eine Steuereinheit auf, die jeweils Daten zu mindestens einem Batteriezustand der Batterieeinheit erfasst und für eine übergeordnete Steuereinheit weiterleitet. Ferner können die Steuereinheiten der Batterieeinheiten Steuersignale von der übergeordneten Steuereinheit empfangen. Die elektrischen Kontaktmittel in mindestens einem Batterieeinschubplatz sind als Master kodiert, wobei eine in diesem Batterieeinschubplatz eingesetzte Batterieeinheit zusammen mit ihrer Steuereinheit die Funktion der übergeordneten Steuereinheit ausübt. In der Funktion als übergeordnete Steuereinheit empfängt diese von den übrigen Steuereinheiten der übrigen eingesetzten Batterieeinheiten Daten zu deren Betriebszuständen und setzt Steuersignale für diese ab. In vorteilhafter Weise kann durch die Kodierung eines Batterieeinschubplatzes als Master eine Steuereinheit einer Batterieeinheit als Mastersteuereinheit bestimmt werden. Eine konstruktionsbedingt als übergeordnete Steuereinheit ausgebildete Steuereinheit braucht somit nicht in das Gesamtsystem integriert werden, wodurch das Energiesystem einfacher gehandhabt werden kann.

Eine Weiterbildung des Flurförderzeugs sieht vor, dass jeder Batterieeinschubplatz eine Datenschnittstelle zu einem programmierbaren Kommunikationsbus aufweist. Durch die Datenschnittstelle zu dem programmierbaren Kommunikationsbus können einzelne Batterieeinheiten in einfacher Weise von dem Batteriesystem getrennt oder hinzugeschaltet werden. Ist beispielsweise eine Batterieeinheit stärker entladen als eine andere beteiligte Batterieeinheiten, so kann durch den Kommunikationsbus eine in den betreffenden Batterieeinschubplatz eingesetzte Batterieeinheit angesteuert werden, um diese durch ein IGBT, ein Schütz oder dergleichen sicher von dem Batteriesystem zu trennen.

Gemäß einer Weiterbildung der Erfindung weisen die elektrischen Kontaktmittel des mindestens einen als Master kodierten Batterieeinschubplatzes eine Hardware- und/oder eine Sofware-Kodierung auf. Eine Hardware-Kodierung eines Batterieeinschubplatzes bestimmt, ob ein Batterieeinschubplatz stets die übergeordnete Steuereinheit definiert und als solche initialisiert wird. Eine solche Kodierung kann jedoch auch durch eine reine Software-Kodierung in dem entsprechenden Batterieeinschubplatz implementiert sein. Ebenfalls denkbar ist es, dass zusätzlich zu einer Hardware-Kodierung eine Software-Kodierung implementiert ist, die die Verwendung einer Steuereinheit als übergeordnete Steuereinheit an vorbestimmte Betriebszustände der eingesetzten Batterieeinheit koppelt.

Bevorzugt weisen die elektrischen Kontaktmittel in jedem Batterieeinschubplatz zwei Pins auf, von denen an einem ein High-Signal und an dem anderen ein Low-Signal anliegt. Je nachdem an welchem Pin das High-Signal bzw. das Low-Signal anliegt, wird der entsprechende Batterieeinschubplatz als Master oder Slave kodiert. Ist beispielsweise ein Batterieeinschubplatz bereits als Master kodiert, kann durch Veränderung eines anliegenden High-Signals zu einem anliegenden Low-Signal und durch Änderung des anliegenden Low-Signals zu einem anliegenden High-Signal die Masterkodierung von einem Batterieeinschubplatz auf einen anderen übertragen werden. Somit ist die Masterkodierung nicht auf einen Batterieeinschubplatz fest voreingestellt. Sollte ein als Master kodierter Batterieeinschubplatz Funktionsstörungen aufzeigen, so kann in einfacher Weise ein anderer Batterieeinschubplatz als Master kodiert werden, so dass ein Batteriesystem ohne den die Funktionsstörungen aufzeigenden Batterieeinschubplatz verwendet werden kann.

Gemäß einer besonders bevorzugten Ausgestaltung sind die Batterieeinheiten baugleich. Das Einsetzen baugleicher Batterieeinheiten in die Batterieeinschubplätze ermöglicht es, eine Batterieeinheit einfach in einen anderen Batterieeinschubplatz einzusetzen. Der als Master kodierte Batterieeinschubplatz kann folglich auch einer anderen Batterieeinheit, als der zuvor entnommenen Batterieeinheit, die Funktion der übergeordneten Steuereinheit übertragen. Bei Verwendung baugleicher Batterieeinheiten muss folglich nicht auf eine Einsetzreihenfolge der Batterieeinheiten in die Batterieeinschubplätze geachtet werden. Das Einsetzen der Batterieeinheiten kann somit viel effizienter und einfacher erfolgen.

Gemäß einer bevorzugten Ausgestaltung der Erfindung erkennt jede in einen Batterieeinschubplatz eingesetzte Batterieeinheit aufgrund der Kodierung des Batterieeinschubplatzes, ob ihre Steuereinheit die Funktion der übergeordneten Steuereinheit ausübt. Weist der Batterieeinschubplatz, in dem eine Batterieeinheit eingesetzt wird, nicht die Kodierung des Masters auf, so erkennt die Steuereinheit der eingesetzten Batterieeinheit, dass diese die Funktion einer untergeordneten Steuereinheit ausübt. Diese untergeordnete Steuereinheit, auch Slave genannt, setzt an die übergeordnete Steuereinheit Signale ab und empfängt von der übergeordneten Steuereinheit, auch Master genannt, Steuersignale zur Umsetzung.

Bevorzugt weist jede Batterieeinheit mindestens eine Sensoreinheit zur Erfassung des Betriebszustandes derselben auf. Als Betriebszustand können eine oder mehrere der folgenden Größen sensiert werden: Strom, Spannung, Ladungszustand und Temperatur der Batterieeinheit. Die Erfassung des Betriebszustandes einer jeden Batterieeinheit ermöglicht es, eine gegebenenfalls beschädigte Batterieeinheit durch die übergeordnete Steuereinheit zu erkennen. Die übergeordnete Steuereinheit kann entsprechende Signale der untergeordneten Steuereinheit senden, so dass die untergeordnete Steuereinheit mit ihrer Batterieeinheit von dem gesamten Batteriesystem getrennt wird. Ferner kann das Entladeverhalten einer jeden Batterieeinheit durch die Überwachung der Betriebszustände genau überwacht werden.

Zum elektrischen Betreiben des Flurförderzeugs ist vorgesehen, dass mindestens in dem als Master kodierten Batterieeinschubsplatz eine geladene Batterieeinheit eingesetzt ist. Zum elektrischen Betreiben des Flurförderzeugs bedarf es der Initialisierung der übergeordneten Steuereinheit. Zur Initialisierung der übergeordneten Steuereinheit muss daher eine geladene Batterieeinheit in dem als Master kodierten Batterieeinschubplatz eingesetzt sein. Sind nur in den als Slaves kodierten Batterieeinschubplätzen Batterieeinheiten eingesetzt, so wird keine übergeordnete Steuereinheit identifiziert, wodurch das Flurförderzeug nicht betriebsbereit ist. Anders herum ist das Flurförderzeug bereits dann betriebsbereit, wenn nur in dem als Master kodierten Batterieeinschubplatz eine Batterieeinheit eingesetzt ist.

Bevorzugt übermitteln die Batterieeinheiten, deren Batterieeinschubplätze nicht als Master kodiert sind, einer der Batterieeinheiten, deren Batterieeinschubplatz als Master kodiert ist, alle erfassten Parameter zu ihrem jeweiligen Betriebszustand direkt oder über die anderen Batterieeinheiten. Das Übermitteln der erfassten Betriebszustände einer jeden Batterieeinheit an die übergeordnete Steuereinheit ermöglicht eine zentrale Verwaltung der Zustände der einzelnen Batterieeinheiten durch eine einzige übergeordnete Steuereinheit.

Gemäß einer bevorzugten Weiterbildung überwacht und steuert eine der Batterieeinheiten, deren Steuereinheit die Funktion der übergeordneten Steuereinheit ausübt, das Laden und/oder Entladen von Energie der übrigen Batterieeinheiten, indem sie eine oder mehrere der übrigen Batterieeinheiten elektrisch verbindet oder trennt. Die Verbindung oder Trennung einer Batterieeinheit von den übrigen Batterieeinheiten kann somit einfach über die übergeordnete Steuereinheit gesteuert werden. Das Verbinden oder Abtrennen einer Batterieeinheit kann somit auch im Betrieb des Flurförderzeugs durchgeführt werden. Das Verbinden oder Trennen eines Energiespeichers von dem Gesamtsystem führt zugleich zu einer Erhöhung oder Reduzierung der Leistungsfähigkeit des gesamten Batteriesystems.

Besonders bevorzugt ist jede Batterieeinheit baugleich ausgebildet und ist separat aus ihrem Batterieeinschubplatz entnehmbar, sowie in jeden der Batterieeinschubplätze einsetzbar. Dies bedeutet, dass eine zuvor in dem als Master kodierten Batterieeinschubplatz eingesetzte Batterieeinheit nach der Entnahme aus diesem in einen als Slave kodierten Batterieeinschubplatz wieder eingesetzt werden kann. Ebenso kann eine in einem als Slave kodierten Einschubplatz eingesetzte Batterieeinheit nach Entnahme in den als Master kodierten Batterieeinschubplatz eingesetzt werden. Bei baugleichen Batterieeinheiten ist somit das Entnehmen und Wiedereinsetzen der Batterieeinheiten vereinfacht. Auch auf die Reihenfolge beim Entnehmen oder Einsetzen der Batterieeinheiten muss keine Reihenfolge beachtet werden, wodurch die Batterieeinheiten effizienter entnommen oder eingesetzt werden können.

Jede Batterieeinheit weist bevorzugt eine Vielzahl von parallel oder in Reihe verschalteter Lithium-Ionen-Akkumulatoren auf. Lithium-Ionen-Akkumulatoren weisen im Vergleich zu den bekannten Bleisäurebatterien eine größere Energiedichte auf und können daher bei gleich bleibender Energiedichte mit kleineren geometrischen Abmessung gebaut werden. Durch die serielle und/oder parallele Verschaltung der Lithium-Ionen-Akkumulatoren in jeder Batterieeinheit können viele Leistungs- und Kapazitätsklassen realisiert werden.

Eine bevorzugte Ausgestaltung des erfindungsgemäßen Flurförderzeugs wird nachfolgend anhand der Figuren beschrieben. Es zeigen:
- Fig. 1: eine Batterieeinheit mit seriell verschalteten Batteriezellen,
- Fig. 2: ein Batteriesystem, das vier Batterieeinheiten umfasst, welche parallel miteinander verschaltet sind,
- Fig. 3: eine mögliche Kodierung der Pins in einem Batterieeinschubplatz,
- Fig. 4a: eine Vielzahl von Batterieeinschubplätzen und deren Funktionsbereitschaft, wenn in dem als Master kodierten Batterieeinschubplatz keine Batterieeinheit eingesetzt ist,
- Fig. 4b: eine Vielzahl von Batterieeinschubplätzen und deren Funktionsbereitschaft, wenn nur in dem als Master kodierten Batterieeinschubplatz eine Batterieeinheit eingesetzt ist.

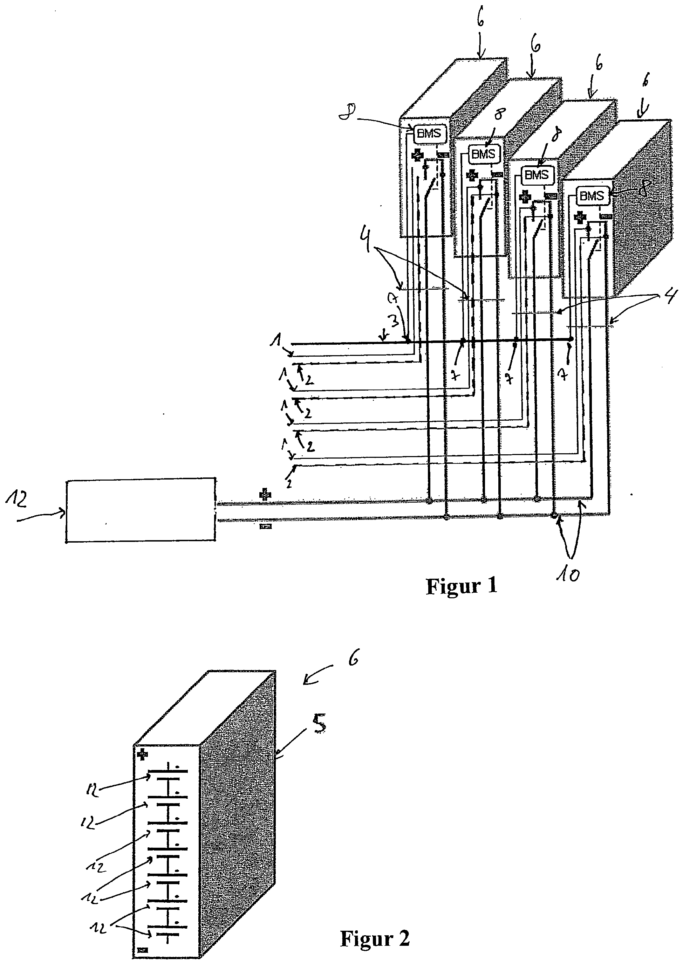

Fig. 1 zeigt eine Batterieeinheit 6. In einem Gehäuse 5 der Batterieeinheit 6 sind seriell eine Vielzahl von Batterieeinzelzellen 12 miteinander verschaltet. Die Batterieeinzelzellen 12 sind vorzugsweise Lithium-Ionen-Akkumulatoren miteinander in Reihe verschaltet. Alternativ können die Batteriezellen 12 in einer Batterieeinheit 6 ganz oder teilweise parallel verschaltet sein. Die in das Gehäuse 5 eingesetzten Batterieeinzelzellen 12 sind in dem Gehäuse 5 fest miteinander verbaut.

Fig. 2 zeigt ein System aus parallel verschalteten Batterieeinheiten 6, die jeweils eine Steuereinheit 8 aufweisen. Jede Batterieeinheit 6 wird in einen Batterieeinschubplatz 4 eingesteckt, wodurch eine elektrische Verbindung zwischen Batterieeinschubplatz 4 und Batterieeinheit 6 entsteht. Jeder Batterieeinschubplatz 4 ist über eine Datenschnittstelle 7 mit einem programmierbaren Kommunikationsbus 3, beispielsweise einem CAN-Bus, verbunden. Ferner weist jeder Batterieeinschubplatz 4 zwei Pins 1, 2 auf, wobei an einem Pin 1, 2 ein High-Signal und an dem anderen ein Low-Signal anliegt. Jede der Batterieeinheiten 6 ist über elektrische Leitungen 10 mit dem Antriebsteil 12 des Flurförderzeugs verbunden.

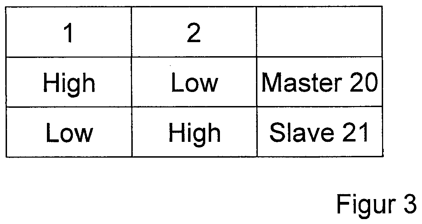

Wie Fig. 3 tabellarisch zeigt, bestimmt die Kodierung der Pins 1, 2, ob ein Einschubplatz 4 zusammen mit der Steuereinheit 8 einer eingesetzten Batterieeinheit 6 die Funktion eines Masters oder die Funktion eines Slaves übernimmt. Liegt beispielsweise ein High-Signal an Pin 1 und ein Low-Signal an Pin 2 vor, so ist der Einschubplatz 4 als Mastereinschubplatz kodiert. Liegt hingegen an Pin 1 ein Low-Signal und an Pin 2 ein High-Signal vor, so ist der entsprechende Batterieeinschublatz 4 als eine untergeordneter Slave kodiert. Die Kodierung der Pins 1, 2 kann durch eine Hardware-Kodierung fest bestimmt sein und/oder durch eine Software-Kodierung veränderbar sein.

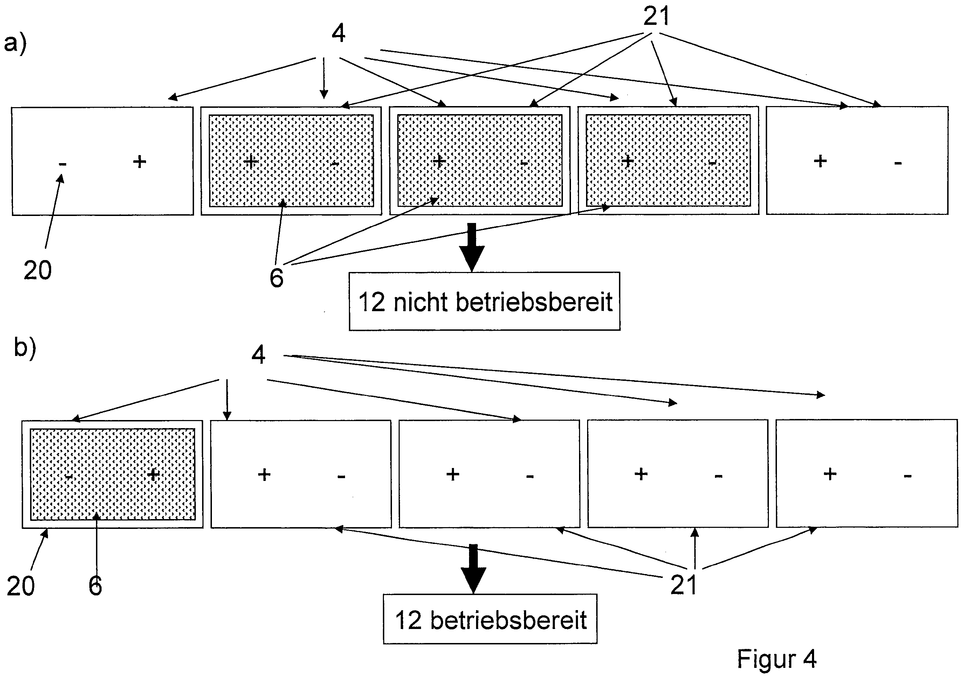

Figuren 4a und 4b zeigen jeweils eine Vielzahl an Batterieeinschubplätzen 4, in die teilweise Batterieeinheiten 6 eingesetzt sind. Die Einschubplätze 4 sind entweder als Master 20 oder als Slave 21 ausgebildet. Gemäß Fig. 4a ist in den als Master 20 ausgebildeten Batterieeinschubplatz 4 keine Batterieeinheit 6 eingesetzt. Daher kann keine der Steuereinheiten der übrigen Batterieeinheiten 6 als übergeordnete Steuereinheit, d.h. als Master, identifiziert werden. Folglich ist das Antriebsteil 12 des Flurförderzeugs nicht betriebsbereit. Hingegen zeigt Fig. 4b, dass in dem als Master ausgebildeten Einschubplatz 4 eine Batterieeinheit 6 eingesetzt ist, wodurch das Antriebsteil des Flurförderzeugs sofort betriebsbereit ist. In Fig. 4 wird folglich veranschaulicht, dass solange keine Batterieeinheit 6 in dem als Master 20 ausgebildeten Batterieeinschubplatz 4 eingesetzt ist, das Flurförderzeug nicht bewegt und keine Hilfsfunktion, wie beispielsweise die Hubfunktion eines Lastaufnahmemittels, ausgeführt werden kann.

## Patentansprüche

1. Flurförderzeug mit einem Antriebsteil und einer Vielzahl von Batterieeinschubplätzen (4) von denen in mindestens zwei Batterieeinschubplätzen (4) je eine Batterieeinheit (6) eingesetzt und mit elektrischen Kontakten des jeweiligen Batterieeinschubplatzes verbunden ist, wobei jede Batterieeinheit (6) eine Steuereinheit (8) aufweist, die jeweils Daten zu mindestens einem Betriebszustand der Batterieeinheit (6) für eine übergeordnete Steuereinheit (8) weiterleitet und Steuersignale von der übergeordneten Steuereinheit (8) empfängt, **dadurch gekennzeichnet, dass** die elektrischen Kontaktmittel in mindestens einem Batterieeinschubplatz (4) als Master (20) kodiert sind und eine in diesen Batterieeinschubplatz (4) eingesetzte Batterieeinheit (6) zusammen mit ihrer Steuereinheit (8) die Funktion der übergeordneten Steuereinheit (8) ausübt und von den Steuereinheiten (8) der übrigen eingesetzten Batterieeinheiten (6) Daten zu deren Betriebszuständen empfängt und Steuersignale für diese absetzt.

2. Flurförderzeug nach Anspruch 1, **dadurch gekennzeichnet, dass** jeder Batterieeinschubplatz (4) eine Datenschnittstelle zu einem programmierbaren Kommunikationsbus aufweist.

3. Flurförderzeug nach Anspruch 1 oder 2, **dadurch gekennzeichnet, dass** die elektrischen Kontaktmittel des mindestens einen als Master (20) kodierten Batterieeinschubplatzes eine Hardware- und/oder Software-Kodierung aufweisen.

4. Flurförderzeug nach einem der Ansprüche 1 bis 3, **dadurch gekennzeichnet, dass** die elektrischen Kontaktmittel in jedem Batterieeinschubplatz (4) zwei Pins aufweisen, von denen an einem ein High-Signal und an dem anderen ein Low-Signal anliegt.

5. Flurförderzeug nach einem der Ansprüche 1 bis 4, **dadurch gekennzeichnet**, **dadurch gekennzeichnet, dass** die Batterieeinheiten (6) baugleich sind.

6. Flurförderzeug nach einem der Ansprüche 1 bis 5, **dadurch gekennzeichnet, dass** jede in einen Batterieschubplatz (4) eingesetzte Batterieeinheit (6) aufgrund der Kodierung des Batterieeinschubplatzes (4) erkennt, ob ihre Steuereinheit (8) die Funktion der übergeordneten Steuereinheit (8) ausübt.

7. Flurförderzeug nach einem der Ansprüche 1 bis 6, **dadurch gekennzeichnet, dass** jede Batterieeinheit (6) mindestens eine Sensoreinheit zur Erfassung des Betriebszustandes derselben aufweist, wobei als Betriebszustand eine oder mehrere der folgenden Größen sensiert werden können: Strom, Spannung, Ladungszustand und Temperatur der Batterieeinheit (6).

8. Flurförderzeug nach einem der Anspruch 1 bis 7, **dadurch gekennzeichnet, dass** zum elektrischen Betreiben des Flurförderzeugs mindesten in dem als Master kodierten Batterieeinschubplatz (4) eine geladene Batterieeinheit (6) eingesetzt ist.

9. Flurförderzeug nach einem der Anspruch 1 bis 8, **dadurch gekennzeichnet, dass** die Batterieeinheiten, (6) deren Batterieeinschubplätze (4) nicht als Master kodiert sind, einer der Batterieeinheiten, (6) deren Batterieeinschubplatz (4) als Master kodiert ist, alle erfassten Parameter zu ihrem jeweiligen Betriebzustand direkt oder über die anderen Batterieeinheiten (6) übermitteln.

10. Flurförderzeug nach einem der Anspruch 1 bis 9, **dadurch gekennzeichnet, dass** eine der Batterieeinheiten, (6) deren Steuereinheit (8) die Funktion der übergeordneten Steuereinheit (8) ausübt, das Laden und/oder Entladen von Energie der übrigen Batterieeinheiten (6) überwacht und/oder steuert, indem sie eine oder mehrere der übrigen Batterieeinheiten (6) elektrisch verbindet oder trennt.

11. Flurförderzeug nach einem der Anspruch 1 bis 10, **dadurch gekennzeichnet, dass** jede der Batterieeinheiten (6) baugleich ausgebildet ist und separat aus ihrem Batterieeinschubplatz (4) entnehmbar sowie in jedem der Batterieeinschubplätze (4) einsetzbar ist.

12. Flurförderzeug nach einem der Anspruch 1 bis 11, **dadurch gekennzeichnet, dass** jede Batterieeinheit (6) eine Vielzahl von parallel und/oder in Reihe verschalteter Lithium-Ionen Akkumulatoren aufweist.

## Claims

1. An industrial truck with a drive part and a plurality of battery insertion areas (4), one respective battery unit (6) being inserted into at least two battery insertion areas (4) thereof and being connected to electrical contacts of the respective battery insertion area, wherein each battery unit (6) comprises a control unit (8) which in each case forwards data for at least one operating state of the battery unit (6) to a superordinate control unit (8) and receives control signals from the superordinate control unit (8),
**characterized in that** the electrical contact means are encoded as master (20) in at least one battery insertion area (4) and a battery unit (6) inserted into this battery insertion area (4) together with its control unit (8) carries out the function of the superordinate control unit (8) and receives data from the control units (8) of the remaining inserted battery units (6) for the operating states thereof and transmits control signals therefor.

2. The industrial truck as claimed in Claim 1, **characterized in that** each battery insertion area (4) comprises a data interface for a programmable communication bus.

3. The industrial truck as claimed in Claim 1 or 2, **characterized in that** the electrical contact means of the at least one battery insertion area encoded as master (20) comprise hardware and/or software encoding.

4. The industrial truck as claimed in one of Claims 1 to 3, **characterized in that** the electrical contact means in each battery insertion area (4) comprise two pins, a high signal being applied to one thereof and a low signal being applied to the other thereof.

5. The industrial truck as claimed in one of Claims 1 to 4, **characterized in that** the battery units (6) are of the same construction.

6. The industrial truck as claimed in one of Claims 1 to 5, **characterized in that** each battery unit (6) inserted into a battery insertion area (4) identifies whether its control unit (8) carries out the function of the superordinate control unit (8), based on the encoding of the battery insertion area (4)

7. The industrial truck as claimed in one of Claims 1 to 6, **characterized in that** each battery unit (6) comprises at least one sensor unit for detecting the operating state thereof, wherein one or more of the following variables may be detected as an operating state: current, voltage, charging state and temperature of the battery unit (6).

8. The industrial truck as claimed in one of Claims 1 to 7, **characterized in that** for the electrical operation of the industrial truck a charged battery unit (6) is inserted at least in the battery insertion area (4) encoded as master.

9. The industrial truck according to one of Claims 1 to 8, **characterized in that** the battery units (6), the battery insertion areas (4) thereof not being encoded as master, transmit to one of the battery units (6), the battery insertion area (4) thereof being encoded as master, all detected parameters for their respective operating state directly or via the other battery units (6).

10. The industrial truck as claimed in one of Claims 1 to 9, **characterized in that** one of the battery units (6), the control unit (8) thereof carrying out the function of the superordinate control unit (8), monitors and/or controls the charging and/or discharging of energy of the remaining battery units (6) by electrically connecting or disconnecting one or more of the remaining battery units (6).

11. The industrial truck as claimed in one of Claims 1 to 10, **characterized in that** each of the battery units (6) is configured to be of the same construction and is able to be removed separately from its battery insertion area (4) and is able to be inserted in each of the battery insertion areas (4).

12. The industrial truck as claimed in one of Claims 1 to 11, **characterized in that** each battery unit (6) comprises a plurality of lithium-ion batteries connected in parallel and/or in series.

## Revendications

1. Chariot de manutention avec une partie d'entraînement et une pluralité d'emplacements d'insertion de batterie (4) parmi lesquels un module de batterie (6) est à chaque fois inséré dans au moins deux emplacements d'insertion de batterie (4) et relié à des contacts électriques de l'emplacement d'insertion de batterie respectif, dans lequel chaque module de batterie (6) présente un module de commande (8) qui transmet à chaque fois des données sur au moins un état de fonctionnement du module de batterie (6) pour un module de commande supérieur (8) et reçoit des signaux de commande du module de commande supérieur (8), **caractérisé en ce que** les moyens de contact électriques dans au moins un emplacement d'insertion de batterie (4) sont codés comme maître (20), et un module de batterie (6) inséré dans cet emplacement d'insertion de batterie (4) exerce avec son module de commande (8) la fonction du module de commande supérieur (8) et reçoit par les modules de commande (8) des modules de batterie insérés restants (6) des données sur leurs états de fonctionnement et envoie des signaux de commande pour ceux-ci.

2. Chariot de manutention selon la revendication 1, **caractérisé en ce que** chaque emplacement d'insertion de batterie (4) présente une interface de données vers un bus de communication programmable.

3. Chariot de manutention selon la revendication 1 ou 2, **caractérisé en ce que** les moyens de contact électriques de l'au moins un emplacement d'insertion de batterie codé comme maître (20) présentent un codage matériel et/ou logiciel.

4. Chariot de manutention selon une des revendications 1 à 3, **caractérisé en ce que** les moyens de contact électriques dans chaque emplacement d'insertion de batterie (4) présentent deux broches parmi lesquelles un signal élevé est en contact avec l'une et un signal bas avec l'autre.

5. Chariot de manutention selon une des revendications 1 à 4, **caractérisé en ce que** les modules de batterie (6) sont de construction identique.

6. Chariot de manutention selon une des revendications 1 à 5, **caractérisé en ce que** chaque module de batterie (6) inséré dans un emplacement d'insertion de batterie (4) reconnaît en raison du codage de l'emplacement d'insertion de batterie (4) si son module de commande (8) exerce la fonction du module de commande supérieur (8).

7. Chariot de manutention selon une des revendications 1 à 6, **caractérisé en ce que** chaque module de batterie (6) présente au moins un module de capteur pour la détection de l'état de fonctionnement de celui-ci, dans lequel une ou plusieurs des grandeurs suivantes peuvent être détectées comme état de fonctionnement : courant, tension, état de charge et température du module de batterie (6).

8. Chariot de manutention selon une des revendications 1 à 7, **caractérisé en ce qu'**un module de batterie chargé (6) est inséré au moins dans l'emplacement d'insertion de batterie (4) codé comme maître pour l'exploitation électrique du chariot de manutention.

9. Chariot de manutention selon une des revendications 1 à 8, **caractérisé en ce que** les modules de batterie (6) dont les emplacements d'insertion de batterie (4) ne sont pas codés comme maître transfèrent à un des modules de batterie (6) dont l'emplacement d'insertion de batterie (4) est codé comme maître tous les paramètres détectés sur son état de fonctionnement respectif directement ou par le biais des autres modules de batterie (6).

10. Chariot de manutention selon une des revendications 1 à 9, **caractérisé en ce qu'**un des modules de batterie (6) dont le module de commande (8) exerce la fonction du module de commande supérieur (8) surveille et/ou commande le chargement et/ou déchargement d'énergie des modules de batterie restants (6) **en ce qu'**il relie électriquement ou sépare un ou plusieurs des modules de batterie (6) restants.

11. Chariot de manutention selon une des revendications 1 à 10, **caractérisé en ce que** chacun des modules de batterie (6) est réalisé de manière identique en construction et peut être retiré séparément de son emplacement d'insertion de batterie (4) ainsi que peut être inséré dans chacun des emplacements d'insertion de batterie (4).

12. Chariot de manutention selon une des revendications 1 à 11, **caractérisé en ce que** chaque module de batterie (6) présente une pluralité d'accumulateurs lithium-ion montés en parallèle et/ou en série.
